# EUROPEAN PATENT APPLICATION

(11) **EP 1 978 646 A2**
(43) Date of publication of application: **08.10.2008**
(21) Application number: 08251006.6
(22) Date of filing: 20.03.2008
(51) Int. Cl.: H04B 1/26

(54) **Superheterodyne receiver with switchable local oscillator frequency and reconfigurable IF filter characteristics**

(30) Priority: 04.04.2007 US 696706
(71) Applicant: Micrel, Inc., San Jose, CA 95131 (US)
(72) Inventor: Gater, Christian, Dunblane, Scotland (GB)
(74) Representative: Pingree, Oliver Norman

(57) **Abstract**

An integrated circuit RF receiver (10) processes multiple RF frequencies without internally changing the local oscillator (18) to receive the multiple signals. No front-end tuner is used. In one embodiment, multiple crystals (22, 24) are connected to pins of the IC. A switch (26) within the IC, controlled by a switch signal (25), selects one of the crystals as a reference frequency, depending on the frequency of the RF signal desired to be received. The selected reference frequency is applied to an RF synthesizer (a local oscillator) to set the output frequency of the RF synthesizer (18). The local oscillator signal is then mixed with the incoming RF signal to generate sum and difference signals that need to be filtered by an IF filter (30). The switch signal (25) also reconfigures the IF filter (30) to change its center frequency and filter bandwidth, based on the requirements of the RF signal data format.

## Description

This invention relates to radio frequency (RF) receivers and, in particular but not exclusively, to an RF receiver that receives more than one frequency.

Garage door openers, car door locks, and other modern devices are operated using an RF transmitter and RF receiver. Most of these devices operate at a single RF carrier frequency set by a piezo-electric crystal or some other fixed reference frequency. However, in certain remote control applications, a receiving system may need to receive multiple RF signals at different carrier frequencies that convey digital information at different transmission rates. For example, it may be beneficial in a particular application for a single receiving system to control a device based on signals from various transmitters outputting different frequencies and transmitting different data formats. In such a case, two or more separate receivers may be used that are each customized for the particular RF signal to be received. Their outputs would then be multiplexed and applied to the device intended to be controlled by the digital signals.

In a more cost efficient solution, a single receiver may be used that has a front-end tuner for only passing the RF of interest and has a local oscillator which is tuned in conjunction with the front-end tuner. The local oscillator may be tuned by, for example, varying a capacitance or a frequency multiplier for achieving a desired intermediate frequency (IF). A reference frequency used by the local oscillator is typically generated by a crystal. The digital data is then extracted from the IF modulated signal. Such receivers using a local oscillator and an IF stage are called superheterodyne receivers. However, such front-end tuners and tunable local oscillators add cost to the receiver and are prone to creating unwanted spurious frequencies that need to be filtered.

For receivers used in common devices as remote controls, it is important to keep costs as low as possible. Such receivers are typically formed largely on a single chip to minimize the cost.

According to the present invention, there is provided a superheterodyne receiver as set out at claim 1.

One embodiment of the present invention comprises a single integrated circuit superheterodyne RF receiver that processes multiple RF frequencies without internally changing the local oscillator (LO) to receive the multiple signals. No front-end tuner is used to filter out unwanted RF signals. In one embodiment, multiple crystals (e.g., two) are connected to pins of the IC. Each crystal has a different resonant frequency. In response to a selection signal, a switch within the IC selects one of the crystals as a reference frequency, depending on the frequency of the RF signal desired to be received. The selection signal may be an external signal applied to a pin of the IC or may be generated internal to the IC. The selected reference frequency is applied to an RF synthesizer (a local oscillator) to set the output frequency of the RF synthesizer. The RF synthesizer may be any type of frequency generator that uses a reference frequency. Hence, the LO frequency is adjusted for the RF signal to be received without changing the characteristics of the internal RF synthesizer, resulting in a very clean LO output signal.

The LO signal is then mixed with the incoming RF signal to generate sum and difference signals that need to be filtered by an IF filter.

The switch selection signal also reconfigures the IF filter to change its center frequency and filter bandwidth, based on the requirements of the RF signal data format. For example, in one embodiment, the IF1 frequency is lower than the IF2 frequency, and the IF filter bandwidth of IF1 is narrower than the bandwidth of IF2. This enables the receiver to recover very selective low level RF 1 input signals with very little noise (due to the narrow IF1 filter bandwidth), while the receiver can also accept a broader range of RF2 input frequencies but with slightly poorer noise performance due to the wider IF2 bandwidth setting.

One example of the benefits of changing the center frequency of the IF is as follows. Assume, for the receiver receiving a signal from a first transmitter, the low IF has a center at 1MHz and a bandwidth of 400KHz. If the desired bandwidth for demodulating a signal from a second transmitter is 2MHz, then the IF center frequency of 1MHz would be problematic. So the IF center frequency for the higher bandwidth may be increased to, for example, 3MHz using the invention.

In another embodiment, changing the center frequency is optional, depending on the parameters of the communication system and the amount of IF filter bandwidth change.

The reconfigurable IF filter uses switchable or variable capacitors and current generators to tune its frequency response, which requires no external components.

Since only the RF signal of interest is processed by the receiver by selecting the proper LO frequency and IF filter characteristics, no front-end tuner is needed.

Reference frequency sources other than piezo-electric crystals may be used, such as ceramic resonators or fixed clock sources.

### BRIEF DESCRIPTION OF THE DRAWINGS

Fig. 1 illustrates various functional units in a single chip receiver in accordance with one embodiment of the invention.
Fig. 2 illustrates a reconfigurable IF filter that may be used in the receiver of
Fig. 1.

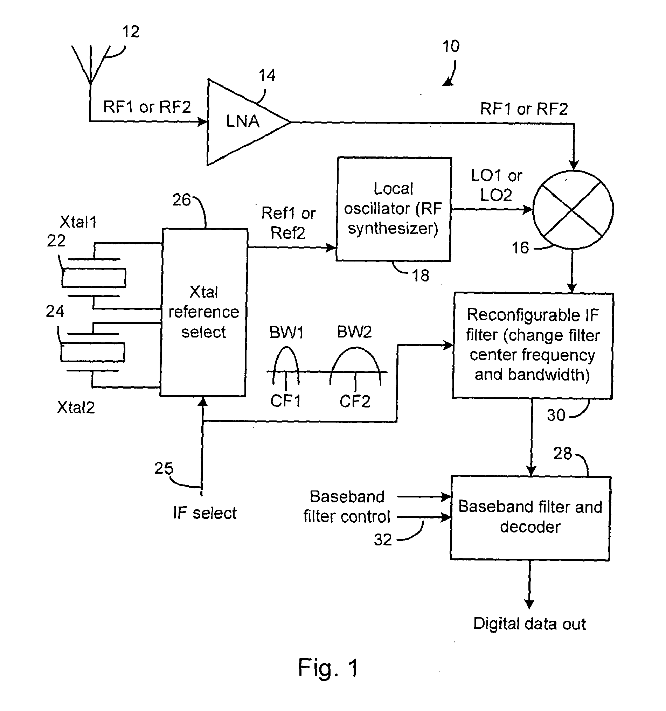

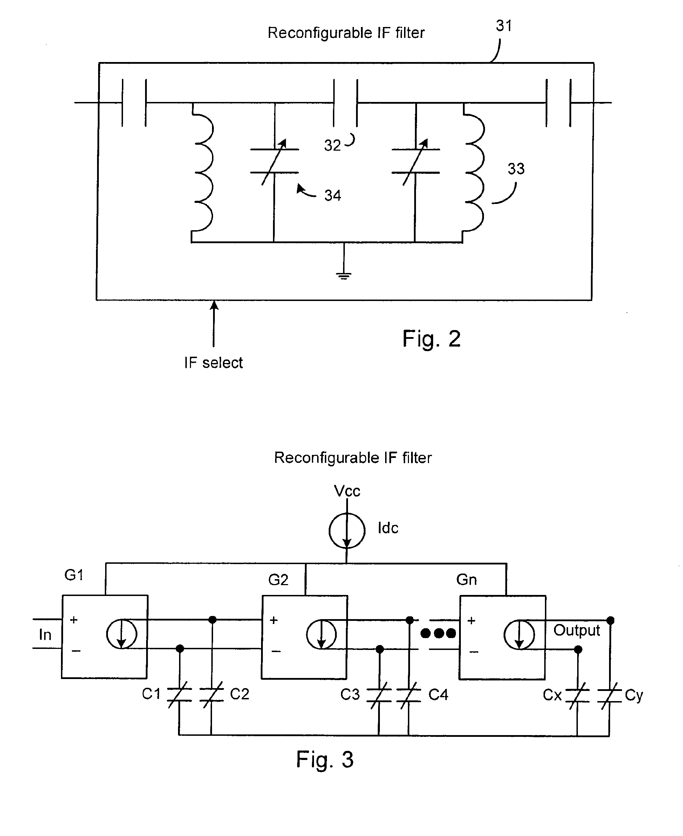

Fig. 3 illustrates another example of a reconfigurable IF filter that may be used in the receiver of Fig. 1.

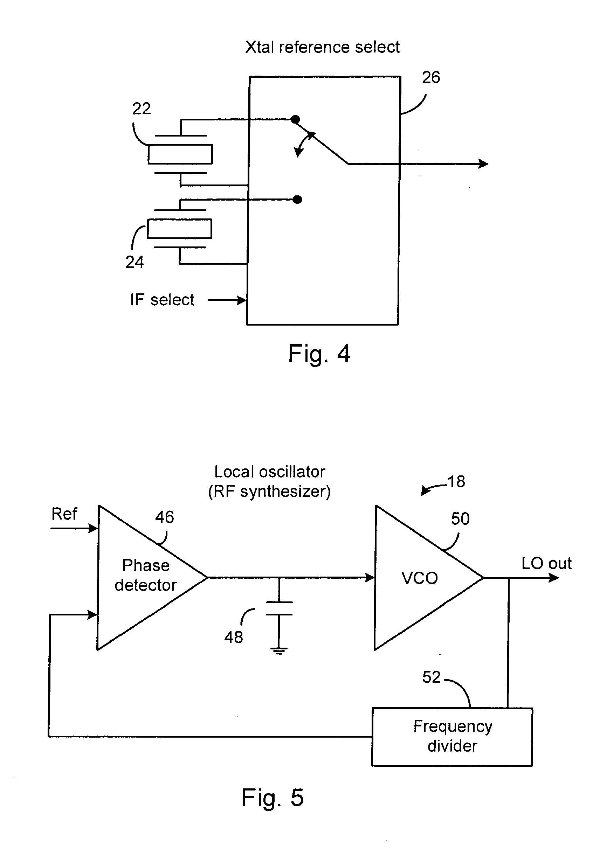

Fig. 4 illustrates a controllable switch for selecting one of the reference frequency sources of Fig. 1.
Fig. 5 illustrates an RF synthesizer, comprising a phase locked loop (PLL), that generates an LO frequency based on the selected reference frequency in Fig. 1.

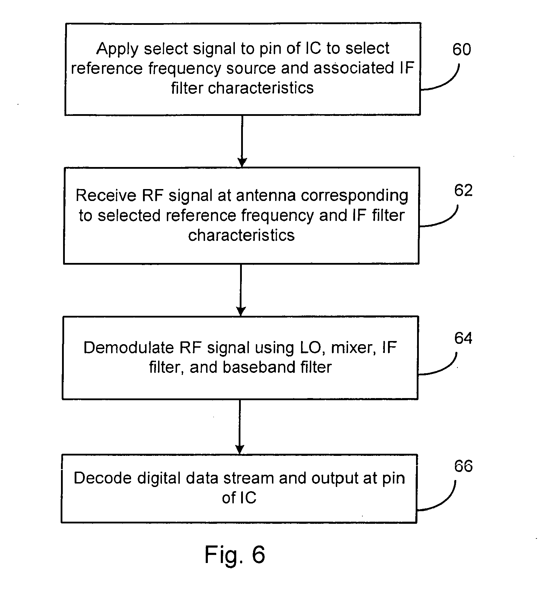

Fig. 6 is a flowchart illustrating various steps performed by the receiver of Fig. 1.

### DETAILED DESCRIPTION

Fig. 1 illustrates an integrated circuit chip comprising the receiver of the present invention. The reference frequency generating crystals (or other reference generators), the antenna, and any large filter capacitors are typically connected to pins of the IC package.

The receiver 10 shown in Fig. 1 receives two different RF signals (RF1 and RF2), having different center frequencies and transmitting digital signals. The data formats (e.g., data rates and encoding) of the digital signals for each RF signal may be different. It is not relevant to the invention whether RF1 and RF2 are being transmitted at the same time or at different times. The receiver will only decode the data in one of the RF signals depending on the reference frequency source selected. Unlike a conventional superheterodyne receiver, there is no front-end tuner for filtering out RF frequencies other than the narrow band of interest. By deleting such a front-end tuner, the receiver can be smaller and inexpensive. Any number of RF signals can be received by expanding the receiver.

An external antenna 12 receives RF1 and RF2. A bandpass filter may be connected to the antenna, external to the IC, to reject frequencies outside of a desired range. The received signals are amplified by a low noise amplifier 14.

The amplified RF1 and/or 12F2 signals are applied to one input of a conventional mixer 16, which multiplies together signals applied to its two inputs. A local oscillator 18 (an RF synthesizer) generates a frequency that is applied to the other input of the mixer 16. The mixer 16 outputs the sum and difference of the two signals, and only the difference signal, called the intermediate frequency (IF), will be used to extract the digital information from the transmitted RF signal of interest.

In one embodiment, the RF1 and RF2 signals are in the range of 300MHz-450MHz, which is a band of interest for remote control devices. The local oscillator 18 generates a frequency that is set so that the difference between the LO frequency and the RF carrier frequency is the desired intermediate frequency. In one embodiment, the IF for the RF1 signal has a center frequency of 1MHz, and the IF for the RF2 signal has a center frequency of 2MHz.

The local oscillator 18 generates a frequency solely based on the reference frequency applied to its input. In the embodiment of Fig. 1, the available reference frequency sources are piezo-electric crystals 22 and 24, whose resonant frequencies determine their reference frequency. Such crystals are typically packaged in a 2-lead package and are readily available in a variety of frequencies.

If the user desires to extract data from the RF1 signal, the user (typically via a programmed processor or ASIC) applies a switch signal (e.g., a logic high signal) to an IF select pin 25 of the IC package to control a crystal reference select switch 26 to select the proper crystal 22 or 24. The selected crystal is then coupled by the switch 26 to the local oscillator 18 input, which then generates a frequency that is a fixed multiple of the reference frequency for application to the mixer 16. Each crystal reference results in a different predetermined output frequency of the local oscillator 18, depending on the frequency multiplication of the local oscillator. The characteristics of the local oscillator internal to the chip are not changed, which results in an inexpensive chip with no spurious signals generated.

The signals output by the mixer 16 need to be filtered to pass only the intermediate frequency to the baseband filter and digital decoder 28 for extracting the digital information. A reconfigurable IF filter 30 is controlled by the IF select signal to have a center frequency (CF1 or CF2) and bandwidth (BW1 or BW2) optimized for the data transmitted in the desired RF signal. In one embodiment, the IF filter 30 has a 3dB bandwidth of 0.4MHz in a first state (IF1) and a 1MHz bandwidth in its second state (IF2). This enables the receiver to recover very selective low level RF1 input signals with very little noise (due to the narrow IF1 filter bandwidth), while the receiver can accept a broader range of RF2 input frequencies but with slightly poorer noise performance due to the wider IF2 bandwidth setting.

The filtered IF signal is then applied to a baseband filter and decoder 28. An IF amplifier may be connected between the two filters. The baseband filter may simply be a low pass filter capacitor connected to ground to remove the IF component and only pass the varying amplitude signal to a shaper and digital decoder circuit. Digital control signals 32 may be applied to the baseband filter to select a baseband filter characteristic for the particular data rate received (e.g., for 12KHz data rate, 50KHz data rate, etc.).

In one embodiment, the digital decoder decodes a Manchester-encoded signal, and an external threshold capacitor is used to set an average voltage as the threshold voltage to determine whether a signal is a logical 1 or zero. A common remote control modulation scheme that may be used is OOK (on/off keying) or ASK (amplitude shift keying).

The characteristics of the IF filter are set to whatever characteristics are desired for reliable extraction of information from the RF signal, and the IF center frequency may be set for optimal performance of the receiver at the different bandwidths.

Any number of reference frequency sources may be selectable, such as up to five different crystals or other type of clock generators. The frequencies of such crystals are standardized, and the LO is designed to create the desired IF center frequency.

In one embodiment, the signal to switch the receiver to receive the RF1 signal or the RF2 signal is generated by hard wiring the receiver select pin to a logical high or logical low voltage during manufacturing of the circuit board for the receiver. This technique is applicable where the manufacturer desires to simplify the fabrication of receivers for receiving either an RF1 signal or an RF2 signal. Once it is determined that the receiver is to be dedicated to receiving only one of the two signals, that setting is fixed by the hard wiring, such as by opening a metal trace on the board or setting a hardware switch. In the case where the receiver is permanently dedicated to receive only a single RF signal, only one crystal reference need be connected to the receiver to save costs.

If the receiver is intended to dynamically switch between states, the mode would be controlled by the application board using, for instance, an output pin of a microcontroller. The exact timing of the switching would depend upon the application and would need to be tailored to the expected data transmission that is being received.

Fig. 2 illustrates one type of reconfigurable IF filter 31 that may be used in the receiver. The filter consists of capacitors 32 and inductors 33 whose values determine the center frequency and bandwidth of the filter. To change the center frequency and bandwidth, one or more of the capacitors may be variable capacitors 34, or additional capacitors may be switched in or connected in parallel. The values of any of the capacitors in Fig. 2 may be change by the IF select signal. The IF select signal changes the effective capacitance values using well known techniques.

Fig. 3 illustrates another type of configurable IF filter 36 that may be used in the receiver. Any number of transconductors G1-Gn may be used to convert a voltage into a proportional current. The current at each stage is summed by the capacitors C1-Cy to create voltages. By adjusting the source current from the Idc current source, the voltage to current conversion ratio can be varied to control the IF filter characteristics. If the capacitors are variable, then the transfer function of the filter can also be varied. Changing either the transconductor current, capacitor value, or both results in the creation of a new filter function.

Fig. 4 illustrates the crystal select switch 26, which couples one or the other crystal 22 or 24 to the local oscillator 18 under control of the IF select signal. Many other types of switch configurations can be used.

Fig. 5 illustrates a phase locked loop (PLL) that may be used as the local oscillator 18. The crystal reference frequency is applied to one input of a phase comparator 46. The phase comparator 46 outputs a signal whose magnitude is related to a phase difference between its two inputs. A low pass filter (capacitor 48) filters the detector 46 output, and a voltage controlled oscillator (VCO) 50 generates a frequency proportional to the voltage on the capacitor 48 and provides the output signal for the local oscillator 18. A frequency divider 52 divides the output from the VCO 50 and feeds the divided frequency back to the phase detector 46. The loop causes the VCO 50 output to be a multiple of the crystal reference frequency such that the inputs to the phase detector 46 match. Many other types of oscillators may be used instead of a PLL with a VCO.

Fig. 6 is a flow chart illustrating various steps performed for operating the receiver. In step 60, a programmed processor or other controller applies a signal to the IF select pin 25 of the receiver chip to select an external reference frequency source and the associated IF filter characteristics required to process a particular RF signal received by the antenna. The IF filter characteristics may be changed in any way, including changing the center frequency and bandwidth characteristics based on the RF carrier frequency and the data format contained in the desired RF signal.

In step 62, the RF signal to be processed is received by the receiver.

In step 64, the RF signal of interest is mixed with the local oscillator frequency, filtered by the reconfigured IF filter, and then filtered by the baseband filter.

In step 66, the baseband signal is optionally shaped to better define the edges and magnitude of the digital data, and the digital data is decoded into serial or parallel bits applied to one or more output pins of the IC package. In one embodiment, the decoder is a Manchester decoder.

The circuits in the receiver chip may use conventional techniques, and many different types of circuits can carry out the required functions. The receiver, other than the crystals and antenna, may be formed as a single integrated circuit.

Having described the invention in detail, those skilled in the art would appreciate that, given the present disclosure, modifications may be made to the invention without departing from the spirit of the inventive concepts described herein. Therefore, it is not intended that the scope of the invention be limited to the specific embodiments illustrated and described.

The disclosures in the abstract and in US 11/696,706, from which the present application claims priority, are hereby incorporated by reference.

## Claims

1. A superheterodyne receiver capable of receiving at least two RF signals at different carrier frequencies comprising:
at least one reference frequency input terminal configured to be connected to at least two different reference frequency sources comprising a first reference frequency source generating a first reference frequency and a second reference frequency source generating a second reference frequency;
a reference frequency source selector coupled to the at least one reference frequency input terminal for coupling a particular reference frequency source to an output of the selector, the selector being controllable by a switching signal to select a particular reference frequency;
a local oscillator coupled to receive a reference frequency from a selected reference frequency source, the local oscillator for generating an oscillator signal having a frequency related to the reference frequency;
a mixer having a first input coupled to receive an output of the local oscillator and a second input coupled to receive at least one RF signal received by an antenna, the mixer for generating an intermediate frequency (IF);
a configurable IF filter coupled to an output of the mixer, at least a bandwidth characteristic of the IF filter being changeable by a state of the switching signal applied to the reference frequency source selector, the bandwidth characteristic of the IF filter being determined based on characteristics of a particular RF signal to be processed, the IF filter for outputting an IF signal; and
a baseband filter coupled to receive the IF signal to be processed for generating digital signals derived from the particular RF signal.

2. The receiver of Claim I wherein the IF has a center frequency, the IF center frequency being a first center frequency if the first reference frequency is selected, and the IF filter having a first bandwidth if the first reference frequency is selected,
the IF center frequency being a second center frequency if the second reference frequency is selected, and the IF filter having a second bandwidth if the second reference frequency is selected,
the first reference frequency being lower than the second reference frequency, the first center frequency being lower than the second center frequency, and the first bandwidth being narrower than the second bandwidth.

3. The receiver of Claim 1 or 2 wherein the oscillator signal generated by the local oscillator has a fixed relationship to the reference frequency.

4. The receiver of Claim 1, 2 or 3 wherein the IF filter bandwidth is centered around the center frequency of the IF.

5. The receiver of Claim 1, 2, 3 or 4 wherein the IF filter comprises transconductors and variable capacitors, wherein the transconductors convert a voltage into a current at a particular ratio, wherein values of the capacitors are changed depending on the reference frequency selected.

6. The receiver of Claim 1, 2, 3, 4 or 5 wherein the IF filter comprises transconductors, wherein the transconductors convert a voltage into a current at a particular ratio, wherein the ratio is changed depending on the reference frequency selected.

7. The receiver of any preceding Claim further comprising the first reference frequency source and the second reference frequency source connected to the at least one reference frequency input terminal.

8. The receiver of any preceding Claim wherein there are more than two reference frequency sources connected to the at least one reference frequency input terminal.

9. The receiver of any one of Claims 1 to 6 further comprising only the first reference frequency source coupled to the at least one reference frequency input terminal, and wherein the frequency source selector being controlled to select the first reference frequency source.

10. The receiver of any preceding Claim wherein the switching signal is a fixed signal.

11. The receiver of Claim 10 wherein the switching signal is hard-wired.

12. The receiver of any one of Claims 1 to 9 wherein the switching signal is generated by a controller while the receiver is active in order to receive one of at least two RF signals.

13. The receiver of any preceding Claim wherein the reference frequency source selector, the local oscillator, the mixer, the IF filter, and the baseband filter are formed in a single integrated circuit chip.

14. The receiver of any of Claims 1 to 9, 12 or 13 wherein the IF filter center frequency and bandwidth are both varied by the state of the switching signal.

15. The receiver of any preceding Claim wherein the particular RF signal to be processed by the receiver is one of a plurality of RF signals having different carrier frequencies received by the antenna.

16. A method performed by a superheterodyne receiver capable of receiving at least two RF signals at different carrier frequencies comprising:
controlling a reference frequency source selector to couple one of a plurality of different reference sources to an output of the selector, the selector being controllable by a switching signal to select a particular reference frequency;
applying a selected reference frequency to a local oscillator, the local oscillator generating an oscillator signal having a frequency related to the reference frequency;
applying an output of the local oscillator and an RF signal to be processed by the receiver to a mixer, the mixer generating an intermediate frequency (IF);
applying an output of the mixer to a configurable IF filter, and selecting at least a bandwidth characteristic of the IF filter by controlling a state of the switching signal applied to the reference frequency source selector, the bandwidth characteristic of the IF filter being determined based on characteristics of a particular RF signal to be processed, the IF filter outputting an IF signal; and
coupling the IF signal to a baseband filter generating digital signals derived from the particular RF signal.

17. The method of Claim 16 wherein the IF has a center frequency, the IF center frequency being a first center frequency if a first reference frequency is selected, and the IF filter having a first bandwidth if the first reference frequency is selected,
the IF center frequency being a second center frequency if a second reference frequency is selected, and the IF filter having a second bandwidth if the second reference frequency is selected,
the first reference frequency being lower than the second reference frequency, the first center frequency being lower than the second center frequency, the first bandwidth being narrower than the second bandwidth.

18. The method of Claim 16 or 17 wherein the oscillator signal generated by the local oscillator has a fixed relationship to the reference frequency.

19. The method of Claim 16, 17 or 18 wherein the IF filter bandwidth is centered around the center frequency of the IF.

20. The method of Claim 16, 17, 18 or 19 wherein a plurality of reference frequency sources are coupled to at least one reference frequency input terminal of the receiver.

21. The method of any one of Claims 16 to 20 wherein the switching signal is generated by a controller so that the receiver receives one of at least two RF signals.

22. The method of any one of Claims 16 to 21 wherein the IF filter center frequency and bandwidth are both varied by the state of the switching signal.
